# EUROPEAN PATENT APPLICATION

(11) **EP 0 650 285 A1**
(43) Date of publication of application: **26.04.1995**
(21) Application number: 94302044.6
(22) Date of filing: 22.03.1994
(51) Int. Cl.: H04M 3/56, H04L 12/433

(54) **Audio communication apparatus**

(30) Priority: 23.10.1993 GB 9321907
(71) Applicant: International Business Machines Corporation, Armonk, N.Y. 10504 (US)
(72) Inventor: Barraclough, Keith Robert, Romsey, Hampshire (GB); Gay, Adrian Charles, Fareham, Hampshire, PO15 6LF (GB); Jones, Alan L., Chandlers Ford, Hampshire (GB)
(74) Representative: Davies, Simon Robert

(57) **Abstract**

The present invention provides communication apparatus for an audio conference which can operate in a limited bandwidth environment. The audio conferencing terminals are arranged to form part of a token ring. Audio data is passed cyclically between the terminals using an audio data packet in a conventional manner. Each audio communication terminal to transmits audio data to its logical successor only when it is in possession of the audio data packet. Each audio communication terminal upon receiving the audio data packet extracts therefrom and outputs to a user of the terminal the audio data contained therein. The audio communication terminal in possession of the audio data packet adds a respective block of digitised audio, comprising current digitised audio samples, to the audio data packet. The audio data packet is then passed to logical successor of the audio communication terminal. Consequently, the audio data packet upon at least one circulation around the token ring comprises audio data which represents the summation or superposition of all of the current digitised audio samples of the parties to the audio conference.

## Description

The present invention relates to audio communication apparatus for audio communication over a data network, especially a data network having a limited bandwidth.

Conventionally voice signals have been transmitted over standard telephone lines. However, with the increase in locations provided with local area networks (LANs) and the growing importance of multimedia communications, there has been considerable interest in the use of LANs to carry voice signals. This work is described for example in "Using Local Area Networks for Carrying Online Voice" by D Cohen, pages 13-21 and "Voice Transmission over an Ethernet Backbone" by P Ravasio, R Marcogliese, and R Novarese, pages 39-65, both in "Local Computer Networks" (edited by P Ravasio, G Hopkins, and N Naffah; North Holland, 1982). The basic principles of such a scheme are that a first terminal or workstation digitally samples a voice input signal at a regular rate (eg 8 kHz). A number of samples are then assembled into a data packet for transmission over the network to a second terminal, which then feeds the samples to a loudspeaker or equivalent device for playout, again at a constant 8 kHz rate.

Conventional older audio communication systems comprise a central mixing hub and audio conferencing terminals connected thereto in a star network. The central hub receives audio signals from each terminal and produces a composite signal therefrom. The composite signal is then transmitted back to each terminal less that terminal's own audio signal. This is to be contrasted against LAN audio conferencing systems which have a more distributed architecture. Each terminal must receive in parallel via a data network the audio signal of all of the other terminals connected to the data network. Receiving the audio signals in parallel requires a large amount of bandwidth.

The bandwidth requirement of an audio communication system using a scheme as described above varies according to the number of users of the system. For example, in an audio communication system which encodes audio as 8 bit pulse code modulation sampled at 8 kHz:
a two way audio conference requires a bandwidth of 2 x 64 kbps;
a five way audio conference using individual addressing requires a bandwidth of 20 x 64 Kbps; and
a five way audio conference using group addressing requires a bandwidth of 5 x 64 Kbps.

Consequently, it can be seen that the greater the number of anticipated users, the greater the bandwidth required to implement the audio communication system. Allowing an audio communication system to utilise the available bandwidth of a LAN without restraint will have an adverse effect on the overall performance of the LAN as perceived by the other users of the LAN.

Accordingly, the present invention provides communication apparatus for connection to a data network for use in an audio conference in which a data packet containing audio data for the conference periodically circulates around the data network; the communication apparatus comprising means for generating a digitised audio block for each successive circulation of the data packet, means for receiving from the data network the data packet containing audio data; means for updating the audio data with the most recently generated digitised audio block; means for transmitting a data packet containing the updated audio data to the data network.

In an embodiment of the present invention the entire conference is effectively contained within a single audio stream, rather than requiring multiple point to point communications. The only slight increase in bandwidth required as more people join the conference is that in binary arithmetic, when summing a plurality P of Q-bit numbers, the number of bits required to store the result, without overflow, is given by the value of Q + log₂(P) rounded up to the nearest integer. It is therefore preferred that the data packet containing the audio data comprises a plurality of ( n + log₂(N) ) bit words, where n corresponds to the number of bits used to represent a digitised audio sample and N is the number of parties to a conference, and each of said words represents the summation of N digitised audio samples of n bits and each sample is derived from a party to the conference.

Therefore, the embodiment of the present invention described herein advantageously provides an N party communication apparatus requiring substantially less bandwidth than prior art communication apparatus.

It is clear that a word containing audio data can comprise a varying number of bits according to the number of parties and the size of the audio samples and is not limited to a multiple of 4, 8, 16 or 32 bits.

Note that, if the number of parties to an audio conferencing system varies, by bringing in additional or cutting out redundant parties, it may be desirable to vary the size of the audio data packet accordingly.

Consequently, a further aspect of the present invention provides a communication apparatus, wherein the size of the audio data packet is dynamic and responsive to the number of parties to the conference. However, as the number of bits used to store the digitised audio samples is not a strong function of N, in that a doubling of the number of current users of the audio conferencing system is required before an additional bit is required to store the summation or superposition of each digitised audio sample, the bandwidth overhead or redundancy involved in sizing the data packet to be slightly larger than immediately necessary is small.

Preferably, the communication apparatus further comprises means for producing an audible output from the intermediate digitised audio block. Alternatively, it is possible to produce an audible output from the audio data received from or transferred to the network, but since this includes the audio signal from the particular terminal there can be problems with echoes and so on.

After, the digitised audio block has been output to the user, it is necessary to store the current digitised audio block for subsequent subtraction from the received audio data upon the next circulation of the data packet.

Suitably, a preferred embodiment provides communication apparatus wherein the means for setting the previous block of digitised audio equal to the current block of digitised audio is responsive to the transmission of the new audio data.

Rather than circulating a single packet comprising the summation of all of the current digitised audio blocks, the communication apparatus can alternatively circulate a table comprising a plurality of entries, each entry position being arranged to contain a current digitised audio block. The number of entries corresponds to the number of parties to the conference. Each party to the conference is allocated a table entry position in which the digitised audio generated by that party will be stored for the duration of the conference. Upon receiving the audio data packet containing the table the communication apparatus copies from each table entry position the current digitised audio block of the other parties. The entry corresponding to the receiving node is then updated with the current digitised audio block for that node (i.e. the previous entry for that node is overwritten). The packet containing the revised table is then sent to the next party to the conference.

Therefore, an embodiment of the present invention provides communication apparatus, wherein the audio data packet comprises a plurality of current digitised audio blocks, one for each party contributing to the conference.

The copied separate digitised audio blocks can be individually conditioned prior to subsequent output. For example, the volume of a digitised audio block can be adjusted independently of the other digitised audio block. After, or prior to, conditioning the copied digitised audio block can be summed and output in the conventional manner. Note that a weighted sum can be used to provide individual adjustment of the volumes of each of the contributory parties.

Accordingly, a further embodiment of the present invention provides communication apparatus further comprising means for weighting each current digitised audio block to control the relative audible output of each party contributing to the conference.

If the user of a terminal is silent, the digitised audio samples derived from the audio input will be zero. In digital communication systems, digital silence can be disconcerting to users as they are used to hearing at least background noise in conjunction with the speaker's voice. It may therefore be desirable to avoid the digital silence and to insert comfort noise derived from the background noise at the conferencing terminal.

Accordingly, a further aspect of the present invention provides a communication apparatus, wherein each sample of the current digitised audio block is set to a predetermined value if silence to detected at the audio input means.

A suitable network which readily lends itself to implementing the present invention is the token ring network, since in this architecture a packet naturally circulates around the network. However, all that is required is for the data packet to go to each terminal in the conference in turn, and it would be possible to logically implement such a structure on any network architecture.

An embodiment of the present invention will now be described, by way of example only, with reference to the accompanying drawings in which:
Figure 1 is a schematic diagram of an audio conferencing system,
Figure 2 is a block diagram of an audio communication terminal of figure 1 embodying the present invention,
Figure 3 is a simplified diagram showing the major components of the audio card used in the audio communication terminal of figure 1,
Figure 4 is a flow diagram representing the operation of the audio communication terminal of figure 2,
Figure 5 schematically illustrates the operation of the audio communication terminal of figure 2.

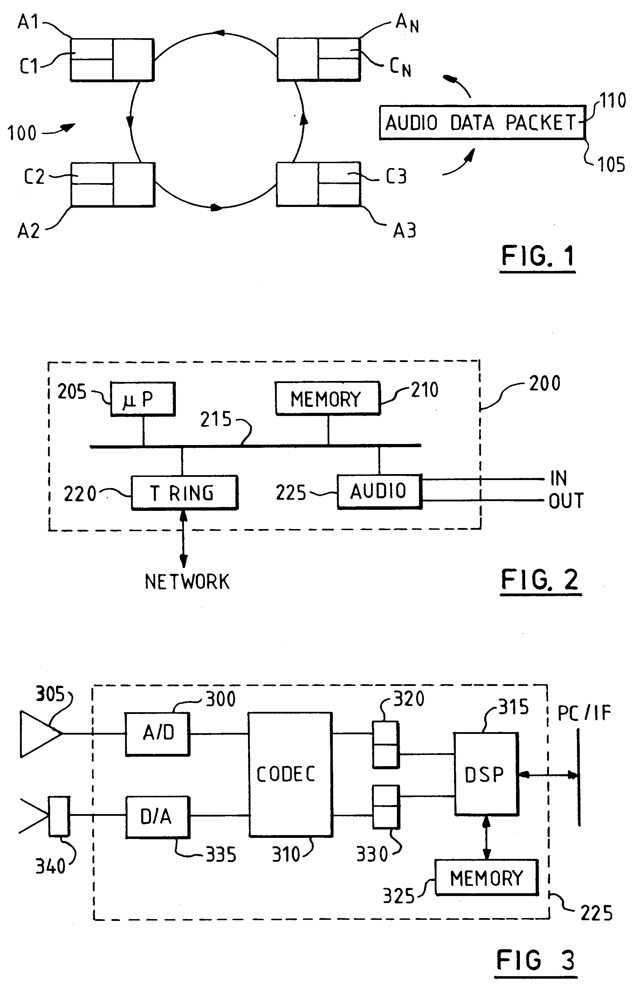

Figure 1 shows a schematic diagram an audio conferencing system 100 comprising a plurality N of audio communication terminals A₁ to A_{N}. The audio communication terminals A₁ to A_{N} are arranged to form part of a token ring. Audio data is passed cyclically between the terminals A₁ to A_{N} using an audio data packet 105 in a conventional manner. Therefore, each audio communication terminal A₁ to A_{N} has a logical predecessor and a logical successor. The logical predecessor of terminal A₁ is terminal A_{N} and the logical successor of terminal A_{N} is terminal A₁. Each audio communication terminal A₁ to A_{N} transmits audio data to its logical successor only when it is in possession of the audio data packet 105.

Each audio communication terminal A₁ to A_{N} upon receiving the audio data packet 105 extracts therefrom and outputs to a user of the terminal the audio data 110 contained therein. The audio communication terminal A₁ to Aₙ in possession of the audio data packet 105 adds a respective block of digitised audio, comprising current digitised audio samples, to the audio data packet 105. The audio data packet 105 is then passed to the logical successor of the audio communication terminal A₁ to A_{N}. Consequently, the audio data packet 105 upon at least one circulation around the token ring comprises audio data 110 which represents the summation or superposition of all of the current digitised audio samples of the parties to the audio conference.

Figure 2 is a simplified schematic diagram of a computer system which may be used as an audio conferencing terminal A₁ to A_{N}. The computer has a system unit 200 including microprocessor 205, semiconductor memory (ROM/RAM) 210, and a bus 215 over which data is transferred. The computer of Figure 2 may be any conventional workstation, such as an IBM PS/2 computer.

The computer of Figure 2 is equipped with two adapter cards. The first of these is a Token Ring adapter card 220. This card, together with accompanying software, allows messages to be transmitted onto and received from a Token Ring. The operation of the token ring card is well-known, and so will not be described in detail. The second card is an audio card 225 which is connected to a microphone and a loudspeaker (not shown) for audio input and output respectively. The system 100 of Figure 1 is typically used for N-way voice communications over a LAN, but may also be used in other multimedia applications, where one node in the network generates a sound signal (eg from an optical disk), which is transmitted over the network to be played out to a user at another node.

The audio card 225 is shown in more detail in Figure 3. The card contains an A/D converter 330 to digitise incoming audio signals from an attached microphone 305. The A/D converter 330 is attached to a codec 310, which samples the incoming audio signal at a rate of 44.1 kHz into 16 bit samples (corresponding to the standard sampling rate/size for compact disks). Digitised samples are then passed to a digital signal processor (DSP) 315 on the card via a double buffer 320 (ie the codec 310 loads a sample into one half of the double buffer while the codec 310 reads the previous sample from the other half). The DSP 315 is controlled by one or more programs stored in semiconductor memory 325 on the card. A block of digitised audio can be transferred by the DSP 315 to and from the main PC bus 215.

Audio signals to be played out are received by the DSP 315 from the PC bus 215, and processed in a converse fashion to incoming audio. That is, the output audio signals are passed through the DSP 315 and a double buffer 330 to the codec 310, from there to a D/A converter 335, and finally to a loudspeaker 340 or other appropriate output device.

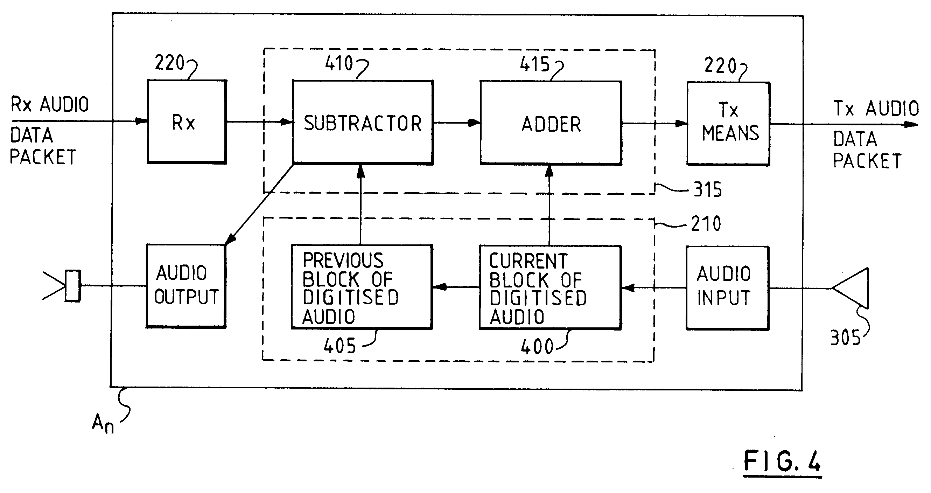

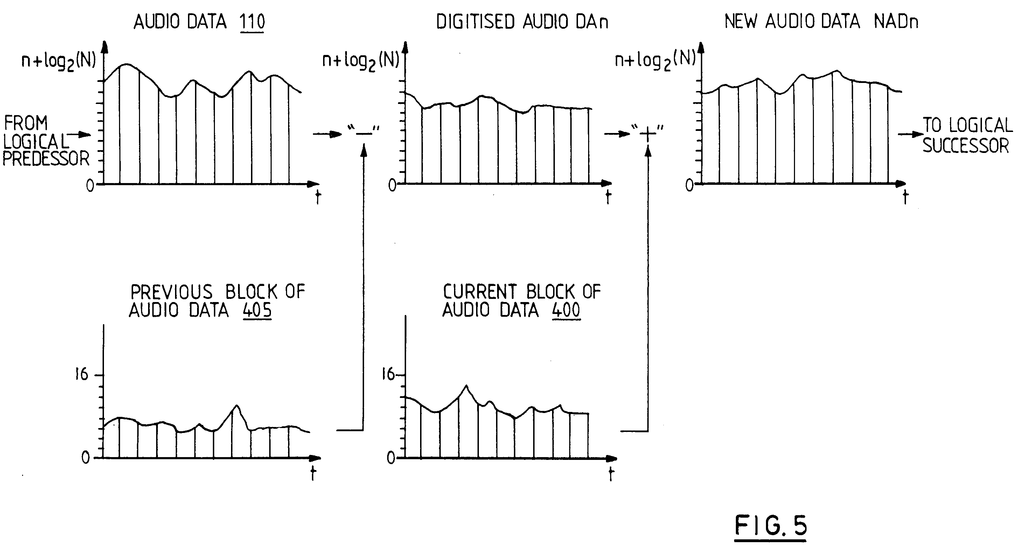

Referring to figures 4 and 5, there is shown a data flow diagram representing the operation of an audio communication terminal Aₙ. The audio communication terminal Aₙ comprises a token ring adapter card 220 illustratively shown as being divided into separate receive and transmit means, a current digitised audio block 400, a previous digitised audio block 405, an audio subtracter 410 and an audio adder 415 and an audio card illustratively shown as being divided into separate audio input and output means.

The token ring adapter card 220 manages the reception and transmission of the audio data packet 105, as it circulates around the data network, from the logical predecessor and to the logical successor of the audio communication terminal Aₙ respectively. The audio communication terminal Aₙ periodically receives, via the token ring adapter card 220, the audio data packet 105 from its logical predecessor. The token ring adapter card 220 extracts from the audio data packet 105 the audio data 110 contained therein in a conventional manner.

The audio subtracter 410 performs the binary subtraction from the extracted audio data 110 of the previous digitised audio block 405 added to the audio data 110. The previous digitised audio block 405 is stored in memory 210. The result of the subtraction, an intermediate digitised audio block IDABₙ, represents the summation or superposition of corresponding samples of the current digitised audio block of all of the other parties to the conference. The intermediate digitised audio block IDABₙ is converted to analog audio by the digital to analog audio converter 335 of the audio card 225 and output via the loud speaker 340 in a conventional manner.

The audio adder 415 performs the binary addition on a word by word basis of intermediate digitised audio block IDABₙ and each corresponding sample of the current digitised audio block 400. In binary arithmetic, when summing a plurality P of Q-bit numbers, the number of bits required to store the result, without overflow, is given by Q + log₂(P). Therefore, in an N party audio conference using n-bits to represent each digital audio sample, the number of bits required to store the summation or superposition of N corresponding samples without overflow is n + log₂(N).

The audio adder 110 passes the new audio data NADₙ resulting from the above summation or superposition to the token ring adapter card 220. The token ring adapter card 220 forwards the new audio data NADₙ to the logical successor of the audio communication terminal in the conventional manner.

After the addition of the current digitised audio block 400 to the intermediate digitised audio block IDABₙ, the previous digitised audio block 405 is set to equal the current digitised audio block 400 in preparation for next receiving the audio data packet 105 and the samples of the current digitised audio block are reset to zero.

If the user of an audio conferencing terminal A₁ to A_{N} is silent, the audio conferencing terminal sets each sample of the current digitised audio block (400) to either zero or some convenient values.

A finite and variable period of time will elapse between the audio communication terminal transmitting the audio data packet 105 to its logical successor and receiving the audio data packet 105 from its logical successor. The period of time will be dependent upon, inter alia, the number of parties to the audio conference and the current local area network utilisation and the speed of the local area network. It is necessary that the data packet be received again before the audio data which is currently being output finishes. That is, the data packet circulation time must be less than or equal to the duration of the audio data contained within the data packet. If the above conditions are not met, the user of the audio conferencing system will perceive a gap or break in the conversation.

Another aspect of the packet circulation time is that the relative timing of the different contributions will not be the same at any two terminals. In fact this is also true of any real-life conference, in view of sound travel time. This feature will not cause problems providing the packet circulation time is small.

For example, an audio conference comprising 4 parties and using 16 bits to represent each digitised audio sample requires an 18-bit word to store the summation or superposition of each of the corresponding digitised audio samples produced by the 4 parties. Therefore, an audio data packet 105 designed to carry, say, 20 milliseconds of audio would require 160 such words. In order that no audio is lost, the maximum duration for the audio data packet 105 to be transmitted around each of the 4 audio communication terminals would be 20 milliseconds.

Although the embodiment of the present invention described herein uses a fixed size audio data packet 105, an enhancement would be an embodiment using a dynamic length data packet. The size of the audio data packet being sized according to the current number of users of the audio conferencing system or the current LAN utilisation.

As an alternative to outputting the received audio data after the previous digitised audio block has been subtracted therefrom, the received audio data may be output to the user prior to the subtraction of the previous digitised audio block, or after the current digitised audio block has been added to the intermediate digitised audio block thereby echoing to a user of the audio communication terminal their own speech. Note that in general such a feature is not normally provided in audio conferencing systems and may prove confusing to the user.

Further, at some terminals there may be no need for an audible output. For example, the conference may be arranged to review a compact disc (CD), which is played at one terminal. The terminal with the CD therefore provides only audio input with no audible output required, unless an addressee is also using that terminal.

Rather than circulating a single packet comprising the summation of all of the current digitised audio blocks, the communication apparatus can alternatively circulate a table comprising a plurality of entrie positions, each entry position being arranged to contain a current digitised audio block. The number of entries corresponds to the number of parties to the conference. Each party to the conference is allocated a table entry position in which the digitised audio generated by that party will be stored for the duration of the conference. Upon receiving the audio data packet containing the table the communication terminal copies from each table entry position the current digitised audio block of the other parties. The entry corresponding to the receiving node is then updated with the current digitised audio block for that node (i.e. the previous entry for that node is overwritten). The packet containing the revised table is then sent to the next party to the conference.

The copied separate digitised audio blocks can be individually conditioned prior to subsequent output. For example, the volume of a digitised audio can be adjusted independently of the other digitised audio samples. After, or prior to, conditioning the copied digitised audio samples can be summed and output in the conventional manner. Note that a weighted sum can be used to provide individual adjustment of the volumes of each of the contributory parties.

Although this approach requires a larger packet than the first embodiment (effectively the bandwidth requirement is proportional to the number of parties to the conference) it has the advantage that the use of such a table allows a party to an audio conference greater freedom of control over the actions he can perform in relation to audio contributions from the different participants. Further, the packaging overhead, in terms of headers, trailers and check sums, and the number of messages sent are greatly reduced as compared to communication terminals in which each digitised audio data channel is packaged and transmitted separately to every other node.

Although the embodiment has been described in terms of a primarily software implementation, ie the audio packets are processed by conventional LAN message handling techniques, a hardware implementation could be used instead. Thus additional circuitry could be added to the circuitry that is already present processing the LAN bit stream to subtract out the previous audio block and add in the new one. The two addition/subtraction operations are very easy to implement in hardware, and require only a minimum processing overhead. Such a hardware implementation, although it would need to be agreed with the appropriate standards authorities (the main LAN architectures are the subject of IEEE standards), would avoid the need to pass messages up and down through the communications stack at each workstation. Thus by performing the subtraction/operation at the lowest possible level in the machine the overall efficiency can be greatly increased, which is very important for real-time applications such as audio conferencing.

## Claims

1. Communication apparatus for connection to a data network for use in an audio conference in which a data packet (105) containing audio data (110) for the conference periodically circulates around the data network; the communication apparatus comprising
means (225) for generating a digitised audio block for each successive circulation of the data packet (105),
means (220) for receiving from the data network the data packet (105) containing audio data (110);
means (315) for updating the audio data (110) with the most recently generated digitised audio block;
means (220) for transmitting a data packet containing the updated audio data to the data network.

2. Communication apparatus as claimed in claim 1, wherein a single audio data block represents the summed contributions of all parties to the conference.

3. Communication apparatus as claimed in claim 2, further comprising
memory (210) for storing current (400) and previous (405) digitised audio blocks,
and
wherein the means for updating the audio data comprises subtraction means (410) for subtracting from the audio data (110) the previous digitised audio block (405) to produce an intermediate digitised audio block (IDAB); and
addition means (415) for adding to the intermediate digitised audio block (IDABₙ) the current digitised audio block (400) to produce the updated audio data, and
means for setting the previous digitised audio block (405) equal to the current digitised audio block (400).

4. Communication apparatus as claimed in claim 3, further comprising means for producing an audible output from the intermediate digitised audio block (IDABₙ).

5. Communication apparatus as claimed in either of claims 3 or 4, wherein the means for setting the previous block of digitised audio equal to the current block of digitised audio is responsive to the transmission of the updated audio data.

6. Communication apparatus as claimed in any of claims 2, 3, 4 or 5, wherein the data packet containing the audio data comprises a plurality of ( n + log₂(N) ) bit words, where n corresponds to the number of bits used to represent a digitised audio sample and N is the number of parties to a conference, and each of said words represents the summation of N digitised audio samples of n bits and each sample is derived from a party to the conference.

7. Communication apparatus as claimed in claim 1, wherein the audio data packet (105) comprises a plurality of current digitised audio blocks (400), one for each party contributing to the conference.

8. Communication apparatus as claimed in claim 7, further comprising means for summing each of the current digitised audio blocks except for the current digitised audio block of the node executing the summation to produce an audible output.

9. Communication apparatus as claimed in claim 8 further comprising means for weighting each current digitised audio block to control the relative audible output of each party contributing to the conference.

10. Communication apparatus as claimed in any preceding claim wherein the data network is a token ring network.

11. Communication apparatus as claimed in any preceding claim wherein the size of the audio data packet (105) is dynamic and responsive to the number of parties to the conference.

12. Communication apparatus as claimed in any preceding claim, wherein each sample of the current digitised audio block (400) is set to a predetermined value if silence is detected at an audio input means (305).
